# EUROPÄISCHE PATENTSCHRIFT

(11) **EP 3 020 903 B1**
(45) Veröffentlichungstag und Bekanntmachung des Hinweises auf die Patenterteilung: **10.11.2021**
(21) Anmeldenummer: 14193365.5
(22) Anmeldetag: 14.11.2014
(51) Int. Cl.: E05D 15/06

(54) **Verkleidungshalterung**
Cover fastener
Support de capot

(43) Veröffentlichungstag der Anmeldung: 18.05.2016
(73) Patentinhaber: dormakaba Deutschland GmbH, 58256 Ennepetal (DE)
(72) Erfinder: Finke, Andreas, 58256 Ennepetal (DE); Drux, Matthias, 58256 Ennepetal (DE); Klossas, Jens, 58256 Ennepetal (DE); Liebscher, Arne, 58256 Ennepetal (DE)
(74) Vertreter: Balder IP Law, S.L.

(56) Entgegenhaltungen:
- EP-A1- 2 453 087
- WO-A1-2014/112372
- DE-B3-102012 203 726
- FR-A1- 2 997 992

## Beschreibung

Die vorliegende Erfindung betrifft eine Verkleidungshalterung zur lösbaren Befestigung, insbesondere an einer Rollenlaufbahn einer Schiebetürenanlage, eine entsprechende Verkleidung, eine Schiebetürenanlage sowie ein Verfahren für die Montage einer Verkleidung an einer Rollenlaufbahn.

Es ist bekannt, dass technische Bauteile häufig vor Einsichtnahme, Staubeinwirkung oder mechanischer Beschädigung geschützt werden sollen. Hierfür werden Verkleidungen vorgesehen, welche in abdeckender Position an solchen Bauteilen befestigbar sind. Beispielsweise ist es bekannt, dass Schiebetüren Rollenlaufbahnen aufweisen, auf welchen ein oder mehrere Rollenwägen verschiebbar gelagert sind. Um diese Rollenwägen entsprechend zu schützen, ist eine Verkleidung angebracht, um vor Einsichtnahme, Verschmutzung oder mechanischer Einwirkung Schutz zu bieten. Diese Verkleidungen werden üblicherweise mit der Rollenlaufbahn verschraubt und auf diese Weise reversibel befestigt.

Gattungsgemäße Verkleidungshalterungen sind beispielsweise aus DE102012203726B3, FR2997992A1 und EP2453087A1 bekannt.

Nachteilhaft bei den bekannten Verkleidungen ist es, dass die Durchführung der Montage relativ zeitaufwendig ist. So ist es notwendig, zumindest zwei, häufig jedoch deutlich mehr Gewindeschrauben anzusetzen und in entsprechende Gewindelöcher zu verschrauben. Dazu ist darüber hinaus ein Montagewerkzeug in Form eines Schraubendrehers oder eines Akkuschraubers notwendig. Nicht zuletzt wird die Komplexität durch die notwendige Vielzahl der einzelnen, kleinteiligen Schrauben während der Montage erhöht. All dies führt zu einem höheren Zeitaufwand und zu einer höheren Komplexität sowie dementsprechend zu einer höheren Fehleranfälligkeit bei der Befestigung solcher Verkleidungen.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Montagefähigkeit einer solchen Verkleidung zu verbessern.

Voranstehende Aufgabe wird gelöst durch eine Verkleidungshalterung mit den Merkmalen des Anspruchs 1, eine Verkleidung mit den Merkmalen des Anspruchs 10, eine Schiebetürenanlage mit den Merkmalen des Anspruchs 11 sowie ein Verfahren mit den Merkmalen des Anspruchs 12.

Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Verkleidungshalterung beschrieben sind, selbstverständlich auch im Zusammenhang mit der erfindungsgemäßen Verkleidung, der erfindungsgemäßen Schiebetürenanlage sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Eine erfindungsgemäße Verkleidungshalterung dient der lösbaren Befestigung, insbesondere an einer Rollenlaufbahn einer Schiebetürenanlage. Hierfür weist eine solche Verkleidungshalterung einen Grundkörper auf, wobei am Grundkörper ein Halteabschnitt zum Halten der Rollenlaufbahn ausgebildet ist. Weiter ist am Grundkörper ein erster Befestigungsabschnitt zur Befestigung an einem ersten Gegenbefestigungsabschnitt der Verkleidung in einer ersten Befestigungsrichtung vorgesehen bzw. ausgebildet. Am Grundkörper ist darüber hinaus ein zweiter Befestigungsabschnitt beabstandet vom ersten Befestigungsabschnitt zur Befestigung an einem zweiten Gegenbefestigungsabschnitt der Verkleidung in einer zweiten Befestigungsrichtung ausgebildet. Die erste Befestigungsrichtung und die zweite Befestigungsrichtung weisen miteinander einen Korrelationswinkel im Bereich zwischen 70° und 110° auf.

Eine erfindungsgemäße Verkleidungshalterung dient also dazu, die bisher im Einsatz befindlichen bekannten Befestigungsmittel in Form von Schrauben zu ersetzen. Die Verkleidungshalterung weist dabei zwei Grundfunktionalitäten auf. Dies ist zum einen die Haltefunktion an der Rollenlaufbahn einer Schiebetürenanlage. Zum anderen handelt es sich dabei um die Befestigungsfunktion der Verkleidung selbst. Dies führt nun zu der Möglichkeit, diese beiden Funktionen separat von der Rollenlaufbahn und separat von der Verkleidung in der erfindungsgemäßen Verkleidungshalterung zu integrieren. Jegliche Komplexität wird dementsprechend auf die Verkleidungshalterung fokussiert und kann dort durch die geometrischen Ausbildungen zur Verfügung gestellt werden. Insbesondere führt dies dazu, dass die Bauteile der Rollenlaufbahn und der Verkleidung kostengünstig und einfach, zum Beispiel in Form eines Strangprofils, ausgebildet sein können.

Erfindungsgemäß sind die beiden Funktionen noch genauer voneinander zu unterscheiden. Beide Funktionen, also die Haltefunktion und die Befestigungsfunktion, sind dabei vorzugsweise reversibel ausgebildet. Es ist jedoch grundsätzlich auch möglich, zumindest eine der beiden Funktionen, insbesondere die Haltefunktion, als irreversible Fixierung auszugestalten, so dass durch die zweite Funktionalität, also bei einer fixierenden und irreversiblen Haltefunktion die Befestigungsfunktion, reversibel ausgestaltet ist. In all diesen Fällen bleibt es möglich, auch nach der Befestigung einer Verkleidung an einer Rollenlaufbahn mithilfe einer erfindungsgemäßen Verkleidungshalterung diese Verkleidung anschließend wieder zu entfernen. Dies kann zum Beispiel bei notwendigem Zugriff auf die innenliegenden technischen Bauteile, in Form einer Wartung oder bei der Behebung eines Defekts Vorteile mit sich bringen. Insbesondere erfolgt dabei ein reversibles Lösen der durchgeführten Befestigung und/oder der durchgeführten Haltefunktion, ohne mechanische Beeinträchtigung der einzelnen Bauteile.

Die Funktionalität der Befestigung ist noch weiter spezifiziert. Dies wird dadurch erreicht, dass die Befestigung in zwei Grundbestandteile aufgeteilt wird. So wird ein erster Befestigungsabschnitt einen ersten Teil der Befestigungsfunktion und ein zweiter Befestigungsabschnitt einen zweiten Teil der Befestigungsfunktion zur Verfügung stellen. Dabei ist darauf hinzuweisen, dass jeder der beiden Befestigungsabschnitte eine definierte Befestigungsrichtung aufweist. Diese definierte Befestigungsrichtung ist ein Richtungsvektor, welcher entlang einer Befestigungsbewegung ausgerichtet ist, also zum Beispiel bei der Ausbildung einer Schnapp-Rast-Funktionalität für den jeweiligen Befestigungsabschnitt die Richtung, welche diese Schnapp-Rast-Funktion zur Verfügung stellt. Dabei können bei entsprechend großen Öffnungswinkeln die Befestigungsrichtungen auch innerhalb eines Befestigungsrichtungsbereichs in Form eines geöffneten Winkelabschnitts ausgebildet sein. Durch die erfindungsgemäße Korrelation von zwei unterschiedlichen Befestigungsrichtungen der beiden separaten Befestigungsabschnitte wird dementsprechend eine Montagebewegung möglich, welche diese beiden Befestigungsbewegungen beinhaltet. Unter einer Montagebewegung ist dabei im Sinne der vorliegenden Erfindung die Gesamtbewegung zu verstehen, welche aus einer Vielzahl von Einzelbewegungen die Verkleidung an der Rollenlaufbahn mithilfe der Verkleidungshalterung befestigt. Unter einer Befestigungsbewegung sind dabei spezifische Einzelbewegungen der Montagebewegung zu verstehen, welche jeweils zum Ausbilden der Befestigungsfunktion des jeweiligen Befestigungsabschnitts führen.

Erfindungsgemäß ist also nun innerhalb der Montagebewegung eine Aufteilung in die zumindest zwei Befestigungsbewegungen vorgenommen, welche aufgrund ihrer geometrischen Ausgestaltung der unterschiedlichen Befestigungsrichtungen unterschiedliche Bewegungsrichtungen aufweisen. Dies führt dazu, dass durch die insbesondere im Wesentlichen senkrechte Ausrichtung der beiden Befestigungsrichtungen zueinander eine entsprechende hohe Sicherheit gegen unerwünschtes Entfernen mit sich gebracht wird. So wird nach dem Einrasten beider Befestigungsabschnitte eine gegenseitige Stabilisierung vorliegen, so dass ein Lösen eines Befestigungsabschnitts durch den anderen Befestigungsabschnitt aufgrund seiner entsprechend korrelierenden anderen Befestigungsrichtung vermieden wird. Um eine solche Befestigung wieder zu lösen, ist eine definierte Vorgehensweise notwendig, welche explizit die umgekehrte Reihenfolge der Montagebewegung durchführt. Dabei ist eine Montagebewegung insbesondere derart aufgebaut, dass die beiden Befestigungsbewegungen voneinander zeitlich getrennt stattfinden. So wird während der Durchführung der Montagebewegung zuerst eine erste Befestigungsbewegung für den ersten Befestigungsabschnitt und erst nach dessen Beendigung eine zweite Befestigungsbewegung für den zweiten Befestigungsabschnitt durchgeführt.

Unter einem Befestigungsabschnitt ist dabei im Sinne der vorliegenden Erfindung insbesondere eine Schnapp-Rast-Funktionalität zu verstehen. Diese kann dadurch zur Verfügung gestellt werden, dass ein oder mehrere Befestigungsschenkel jeweils einen Befestigungsabschnitt ausbilden. Dabei kann eine solche Schnapp-Rast-Funktion insbesondere durch entsprechend elastische Ausbildung einzelner Materialabschnitte bzw. Befestigungsschenkel des jeweiligen Befestigungsabschnitts zur Verfügung gestellt werden. Selbstverständlich sind jedoch grundsätzlich auch andere technische Lösungen für den jeweiligen Befestigungsabschnitt im Sinne der vorliegenden Erfindung denkbar.

Die Haltefunktion wird durch den Halteabschnitt gewährleistet und kann ebenfalls in Schnapp-Rast-Funktionalität ausgestaltet sein. Jedoch sind auch andere technische Lösungen, wie zum Beispiel ein Reibschluss, ein Kraftschluss und/oder ein Formschluss für die Haltefunktion einsetzbar. Erfindungsgemäß ist die Haltefunktion als Formschluss ausgestaltet. Selbstverständlich können auch unterschiedliche Funktionalitäten für den Halteabschnitt miteinander kombiniert werden.

Der Korrelationswinkel ist im Sinne der vorliegenden Erfindung der Winkel zwischen den beiden Befestigungsrichtungen. Mit anderen Worten ist die jeweilige Befestigungsbewegung insbesondere senkrecht oder im Wesentlichen senkrecht zur korrelierenden Befestigungsbewegung des anderen Befestigungsabschnitts ausgestaltet. Durch eine Korrelationswinkeleinstellung im Bereich zwischen 70° und 110° wird dabei der erfindungsgemäße Vorteil der gegenseitigen Stabilisierung erzielt. Dabei ist dieser Korrelationswinkel aufgespannt in einer Ebene, welche durch die beiden Vektoren der Befestigungsrichtungen aufgespannt wird. An einer Rollenlaufbahn ist diese Ebene senkrecht auf der entsprechend ausgebildeten Bewegungsrichtung eines Rollenlaufwagens auf dieser Rollenlaufbahn. Jedoch sind grundsätzlich selbstverständlich auch andere, insbesondere spitzwinklige Ausrichtungen in einer solchen Ebene im Sinne der vorliegenden Erfindung denkbar.

Vorteilhaft ist es, wenn bei einer erfindungsgemäßen Verkleidungshalterung der Korrelationswinkel im Bereich zwischen 85° und 95°, insbesondere bei 90° liegt. Je genauer die Ausbildung bzw. Ausrichtung des Korrelationswinkels im Bereich einer senkrechten Korrelation steht, umso stärker tritt die gegenseitige Stabilisierung gemäß der vorliegenden Erfindung ein. Eine genau senkrechte Ausbildung führt dazu, dass die später reversibel durchführbare Demontage im Wesentlichen auf eine explizite umgekehrte Reihenfolge der Einzelbewegungen für die einzelnen Befestigungsbewegungen der Montagebewegung eingestellt ist. Bei der Montage führt dies zu einer Erleichterung, da ebenfalls in definierter und insbesondere vorzugsweise geführter Weise eine Befestigung und ein Aneinanderreihen der einzelnen Befestigungsbewegungen stattfinden kann.

Vorteilhaft ist es weiter, wenn bei einer erfindungsgemäßen Verkleidungshalterung der Grundkörper eine Anlagefläche aufweist zur Anlage an eine Gegenfläche der Verkleidung. Dabei ist die Anlagefläche insbesondere zwischen den beiden Befestigungsabschnitten angeordnet. Eine solche Anlagefläche korreliert dabei hinsichtlich ihrer geometrischen Erstreckung mit der Gegenanlagefläche. Das bedeutet, dass diese beiden Flächen komplementär oder zumindest abschnittsweise komplementär ausgebildet sind. Insbesondere handelt es sich hierbei um ebene Flächen. Dabei kann eine solche Korrelation zwischen Anlagefläche und Gegenanlagefläche insbesondere eine mechanische Stabilisierung im montierten Zustand zur Verfügung stellen. Darüber hinaus können zusätzlich Abschnitte, insbesondere Kanten der Verkleidungshalterung, an der Gegenanlagefläche abgleiten, so dass auf diese Weise eine Führungsfunktionalität für die Durchführung der Montagebewegung bzw. Teilen der Montagebewegung gewährleistet wird. Die Gegenanlagefläche wirkt in einem solchen Fall als Führungsmittel für die Montage bzw. die Befestigung der Verkleidungshalterung an der Verkleidung.

Vorteilhaft ist es darüber hinaus, wenn bei einer erfindungsgemäßen Verkleidungshalterung die Wandstärke des Grundkörpers wenigstens eines der folgenden Verhältnisse aufweist:
- Abschnitt der Anlagefläche : einem ersten Befestigungsschenkel des ersten Befestigungsabschnitts im Bereich zwischen 0,5 und 1,5
- Abschnitt der Anlagefläche : einem zweiten Befestigungsschenkel des ersten Befestigungsabschnitts im Bereich zwischen 0,5 und 1,5
- Abschnitt der Anlagefläche : einem ersten Befestigungsschenkel des zweiten Befestigungsabschnitts im Bereich zwischen 0,5 und 1,5
- Abschnitt der Anlagefläche : einem zweiten Befestigungsschenkel des zweiten Befestigungsabschnitts im Bereich zwischen 0,5 und 1,5
- Abschnitt der Anlagefläche : dem Halteabschnitt im Bereich zwischen 0,5 und 3

Die voranstehende Aufzählung ist eine nicht abschließende Liste. Für die Korrelationen zwischen der Anlagefläche und den jeweiligen Befestigungsschenkeln ist insbesondere ein Bereich zwischen 0,75 und 1,25 vorgesehen. Bevorzugt ist für dieses Verhältnis jeweils ein Bereich zwischen 0,9 und 1,1. Für das Verhältnis zwischen Anlagefläche und Halteabschnitt kann insbesondere ein Bereich zwischen 1 und 2,5, besonders bevorzugt ein Bereich zwischen 1 und 2 vorgesehen werden.

Insbesondere ist ein Großteil der vorliegenden Ausbildung des Grundkörpers mit identischer oder im Wesentlichen identischer Wandstärke ausgebildet. Sind unterschiedliche Wandstärken vorgesehen, so sind diese in den voranstehenden Grenzen nur durch geringe Wandstärkensprünge ausgebildet, so dass eine erleichterte Herstellbarkeit der Verkleidungshalterung möglich wird. Insbesondere kann auf diese Weise in kostengünstiger und einfacher Ausgestaltungsform ein Spritzgussverfahren und damit eine Verkleidungshalterung aus Kunststoff, insbesondere aus thermoplastischem Kunststoff, eingesetzt werden.

Vorteilhaft ist es darüber hinaus, wenn bei einer erfindungsgemäßen Verkleidungshalterung der erste Befestigungsabschnitt und/oder der zweite Befestigungsabschnitt jeweils einen ersten Befestigungsschenkel und einen zweiten Befestigungsschenkel aufweisen. Dabei schließen die beiden Befestigungsschenkel miteinander insbesondere einen Befestigungswinkel im Bereich zwischen 75° und 290° ein. Je größer dieser Befestigungswinkel ausgebildet ist, umso freier ist die Ausrichtung bei der Befestigung. Je größer dieser Befestigungswinkel ist, umso breiter ist auch ein entsprechender Vektorbereich ausgebildet, in welchem die erfindungsgemäße Befestigungsrichtung ausgebildet ist. Ist eine solche Ausbildung vorgesehen, so bringt ein besonders breiter Befestigungswinkel eine erleichterte Montierbarkeit mit sich. Wird der Befestigungswinkel in einem kleinen Rahmen gewählt, so ist eine entsprechend kleinere Auswahl an möglichen Befestigungsrichtungen für eine Reduktion eines entsprechenden Winkelbereichs für den Befestigungsvektor definiert. Damit wird eine erhöhte Sicherheit der Verkleidungshalterung im befestigten Zustand gewährleistet. Insbesondere ist durch einen entsprechenden Befestigungswinkel eine Schwenkbewegung vor der Durchführung der nachfolgenden und finalen Befestigungsbewegung möglich.

Ein weiterer Vorteil kann es sein, wenn bei einer erfindungsgemäßen Verkleidungshalterung der erste Befestigungsabschnitt und/oder der zweite Befestigungsabschnitt ausgebildet sind für eine formschlüssige und/oder kraftschlüssige Befestigung an dem jeweiligen Gegenbefestigungsabschnitt, insbesondere in Form einer Schnapp-Rast-Verbindung. Dabei sind insbesondere Befestigungsschenkel der Befestigungsabschnitte für eine solche Schnapp-Rast-Verbindung zur Verfügung gestellt. Formschlüssige und/oder kraftschlüssige Befestigungen sind dabei zum Beispiel zur Verfügung stellbar, indem der jeweilige Befestigungsabschnitt, insbesondere in einem Teil oder in einem Befestigungsschenkel, in elastischer Weise ausgebildet ist. Dies führt zu einem elastischen Verformen, wobei durch die elastischen Rückstellkräfte in dem jeweiligen Material das Einrasten in Form einer Rastbewegung zur Verfügung gestellt wird. Das Vorsehen einer Schnapp-Rast-Verbindung für eine oder beide Befestigungsabschnitte führt darüber hinaus zu einer höheren Sicherheit bei der Montage, da sowohl eine haptische, als auch eine akustische Rückmeldung durch das Einrasten das Beenden der jeweiligen Befestigungsbewegung anzeigt.

Erfindungsgemäß weist bei einer erfindungsgemäßen Verkleidungshalterung der Halteabschnitt für eine schwenkende und/oder rotierende Befestigung an einer Rollenlaufbahn eine plattenförmige Erstreckung auf mit einer Breite, welche kleiner als die Länge dieser plattenförmigen Erstreckung ist. Der Halteabschnitt dient also dazu, in einer Rotationsbewegung oder in einer Schwenkbewegung die entsprechende Haltefunktion zu erfüllen. So ist eine zugehörige Nut an der Rollenlaufbahn ausgebildet sein. Mit der geringeren Breitenerstreckung wird nun der Halteabschnitt in diese Nut eingeführt. Durch eine Schwenk- oder Rotationsbewegung, insbesondere im Bereich bis ca. 90°, kann nun die Längsseite derart ausgerichtet werden, dass der Halteabschnitt innerhalb der Nut gehalten wird. Diese Nut ist also auf beiden Seiten mit einem Hinterschnitt ausgebildet, hinter welchem die entsprechenden Stirnseiten eines solchen plattenförmigen Halteabschnitts eingreifen können. Dabei kann es sich hier um einen Formschluss handeln, welcher mit einem Reibschluss, insbesondere, jedoch nicht erfindungsgemäß, passgenau einhergeht. Erfindungsgemäß ist vorgesehen, dass der Halteabschnitt innerhalb einer solchen Nut einen Bewegungsspielraum aufweist, so dass dieser Halteabschnitt verschiebbar in der Nut gelagert ist. Dies erleichtert es nach dem Einstellen der Haltefunktion, also nach dem Einsetzen des Halteabschnitts in die Nut, anschließend ein seitliches Verschieben zu gewährleisten. Die Flexibilität während der Montage wird auf diese Weise erhöht.

Vorteilhaft ist es weiter, wenn bei einer erfindungsgemäßen Verkleidungshalterung der Grundkörper monolithisch ausgebildet ist und den Halteabschnitt, den ersten Befestigungsabschnitt und/oder den zweiten Befestigungsabschnitt in integraler Weise ausbildet. Dabei ist unter einem monolithischen bzw. integralen Ausbilden eine einstückige Ausbildung zu verstehen. Dies bezieht sich insbesondere auf ein einziges Material für all diese Bauteilabschnitte. Jedoch ist es grundsätzlich auch denkbar, dass mithilfe eines Mehrkomponentenspritzgussverfahrens als beispielsweise Herstellungsform, eine Mehrmaterialausbildung für eine solche monolithische Form des Grundkörpers erzeugt wird. Grundsätzlich ist die monolithische Ausführung für die Reduktion der Herstellkomplexität, zum Beispiel in Hinblick auf ein Spritzgussverfahren, mit großen Vorteilen versehen.

Ein weiterer Vorteil ist es, wenn bei einer erfindungsgemäßen Verkleidungshalterung der Grundkörper, insbesondere im Bereich des Halteabschnitts, zumindest zwei Verstärkungsrippen zur mechanischen Verstärkung aufweist, welche vorzugsweise parallel zueinander verlaufen. Ist ein solcher Halteabschnitt zum Beispiel mit einer Anlagefläche versehen, welche in Richtung des Bodens einer entsprechenden Nut der Rollenlaufbahn zeigt, so kann dies als Vorderseite bezeichnet werden. Die entsprechende Rückseite ist vorzugsweise durch diese Ausführungsform mit den zumindest zwei Verstärkungsrippen verstärkt. Die mechanische Verstärkung dient dazu, in rippenförmiger Weise Material einzusparen und insbesondere eine für ein Spritzgussverfahren vorteilhafte Wandstärkenkorrelation hinsichtlich der Übergänge zu gewährleisten. Die parallele Ausgestaltung führt ebenfalls dazu, im Spritzguss eine erleichterte Formgebung zur Verfügung zu stellen.

Vorteilhaft ist es weiter, wenn bei einer erfindungsgemäßen Verkleidungshalterung die beiden Befestigungsabschnitte ausgebildet sind für zwei zumindest teilweise unterschiedliche Befestigungsbewegungen. Dabei ist insbesondere auf die Art der Befestigungsbewegung abzuzielen, so dass zum einen die erste Befestigungsbewegung vorzugsweise rein translatorisch oder zumindest in ihrem Ende translatorisch erfolgt. Die zweite Befestigungsbewegung hinsichtlich des zweiten Befestigungsabschnitts ist dabei vorzugsweise zumindest teilweise verschwenkend oder rotatorisch zur Verfügung gestellt. Auf diese Weise können die beiden separaten Bewegungsarten der beiden Bewegungsabschnitte noch exakter voneinander unterschieden werden, wodurch insbesondere die Demontage in definierter Weise und vor allem in gesicherter Weise zur Verfügung gestellt wird.

Ebenfalls Gegenstand der vorliegenden Erfindung ist eine Verkleidung für die Abdeckung einer Rollenlaufbahn einer Schiebetürenanlage. Eine solche Verkleidung weist eine Verkleidungshalterung gemäß der vorliegenden Erfindung und einen ersten Gegenbefestigungsabschnitt zur Befestigung eines ersten Befestigungsabschnitts der Verkleidungshalterung entlang einer ersten Befestigungsrichtung auf. Weiter ist ein zweiter Gegenbefestigungsabschnitt vorgesehen für die Befestigung eines zweiten Befestigungsabschnitts dieser Verkleidungshalterung entlang einer zweiten Befestigungsrichtung. Die beiden Befestigungsrichtungen weisen miteinander einen Korrelationswinkel im Bereich zwischen 70° und 110° auf. Durch die Verwendung einer erfindungsgemäßen Verkleidungshalterung bringt eine erfindungsgemäße Verkleidung die gleichen Vorteile mit sich, wie sie ausführlich mit Bezug auf eine erfindungsgemäße Verkleidungshalterung erläutert worden sind. Selbstverständlich können auch zwei oder mehr Verkleidungshalterungen für die Befestigung zur Verfügung gestellt werden.

Ein weiterer Gegenstand der vorliegenden Erfindung ist eine Schiebetürenanlage, aufweisend eine Rollenlaufbahn und wenigstens einen in der Rollenlaufbahn verschiebbar gelagerten Rollenwagen. Eine erfindungsgemäße Schiebetürenanlage zeichnet sich dadurch aus, dass die Rollenlaufbahn von einer Verkleidung gemäß der vorliegenden Erfindung abgedeckt ist, welche mit zumindest einer Verkleidungshalterung gemäß der vorliegenden Erfindung befestigt ist. Auch damit bringt eine erfindungsgemäße Schiebetürenanlage die gleichen Vorteile mit sich, wie sie ausführlich mit Bezug auf eine erfindungsgemäße Verkleidungshalterung erläutert worden sind. Ebenfalls Gegenstand der vorliegenden Erfindung ist ein Verfahren für die Montage einer Verkleidung an einer Rollenlaufbahn einer Schiebetürenanlage, aufweisend die folgenden Schritte:
- Befestigen einer Verkleidungshalterung gemäß der vorliegenden Erfindung an der Rollenlaufbahn,
- Befestigen eines ersten Befestigungsabschnitts der Verkleidungshalterung entlang einer ersten Befestigungsrichtung an einem ersten Gegenbefestigungsabschnitt der Verkleidung,
- Befestigen eines zweiten Befestigungsabschnitts der Verkleidungshalterung entlang einer zweiten Befestigungsrichtung an einem zweiten Gegenbefestigungsabschnitt der Verkleidung.

Durch die Verwendung einer erfindungsgemäßen Verkleidungshalterung bringt ein erfindungsgemäßes Verfahren die gleichen Vorteile mit sich, wie sie ausführlich mit Bezug auf eine erfindungsgemäße Verkleidungshalterung erläutert worden sind.

Bei einem erfindungsgemäßen Verfahren erfolgt die Befestigung der Verkleidungshalterung an der Rollenlaufbahn durch eine rotatorische Befestigungsbewegung im Bereich zwischen 15° und 135°. Diese rotatorische Bewegung erlaubt es, eine explizite Unterscheidung zu einer verschiebenden und/oder translatorischen Befestigungsbewegung der Befestigungsabschnitte zur Verfügung zu stellen, wie sie nachfolgend erläutert wird. Insbesondere erfolgt dabei eine rotatorische Bewegung um eine Achse, welche im Wesentlichen entlang der Schwerkraftrichtung in der montierten Position der Rollenlaufbahn zur Verfügung gestellt ist. Bevorzugt erfolgt hier eine Rotation im Bereich um ca. 90° ±10°, um eine eindeutige Unterscheidung zwischen den unterschiedlichen Positionen und gleichzeitig eine reduzierte Erstreckung der notwendigen Befestigungsbewegung zur Verfügung zu stellen.

Das erfindungsgemäße Verfahren ist vorteilhafterweise dahingehend weitergebildet, dass die Befestigung der Befestigungsabschnitte wie folgt durchgeführt wird:
- Befestigen des ersten Befestigungsabschnitts der Verkleidungshalterung entlang der ersten Befestigungsrichtung an dem ersten Gegenbefestigungsabschnitt der Verkleidung durch eine verschiebende Befestigungsbewegung, insbesondere mit einem Schwenkbereich von weniger als 10°, und/oder
- Befestigen des zweiten Befestigungsabschnitts der Verkleidungshalterung entlang der zweiten Befestigungsrichtung an dem zweiten Gegenbefestigungsabschnitt der Verkleidung durch Rotation um den ersten Befestigungsabschnitt.

Die beiden voranstehenden Befestigungsschritte können sowohl in Kombination als auch jeweils einzeln durchgeführt werden. Hier kommt nochmals zum Tragen, wie die Korrelation unterschiedlicher Befestigungsrichtungen eine definierte Befestigungsreihenfolge als gesamte Montagebewegung zur Verfügung stellt. Die Demontage erfolgt in erfindungsgemäßer Weise in umgekehrter Reihenfolge. So ist dementsprechend ebenfalls Gegenstand der vorliegenden Erfindung ein entsprechendes Verfahren zur Demontage der Verkleidung, wobei die voranstehende Beschreibung, insbesondere zu den Ansprüchen 12 und 13, entsprechend in der einzelnen Bewegung in umgekehrter Reihenfolge für ein solches Demontageverfahren ausgeführt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Fig. 1: eine Ausführungsform einer Verkleidungshalterung,
- Fig. 2: die Ausführungsform der Fig. 1 in seitlicher Darstellung,
- Fig. 3: die Ausführungsform der Fig. 1 und 2 mit befestigter Verkleidung,
- Fig. 4: in seitlicher Darstellung die Ausführungsform der Fig. 1 bis 3 in montierter Position an der Rollenlaufbahn,
- Fig. 5: die Situation während dem Einsetzen des Halteabschnitts,
- Fig. 6: die Situation während der Durchführung der ersten Befestigungsbewegung,
- Fig. 7: die Situation während der Durchführung der zweiten Befestigungsbewegung und
- Fig. 8: die Situation kurz vor der Durchführung der Montage.

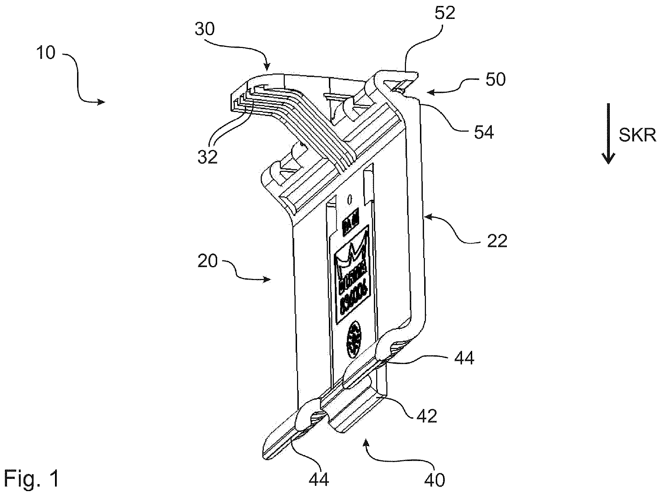

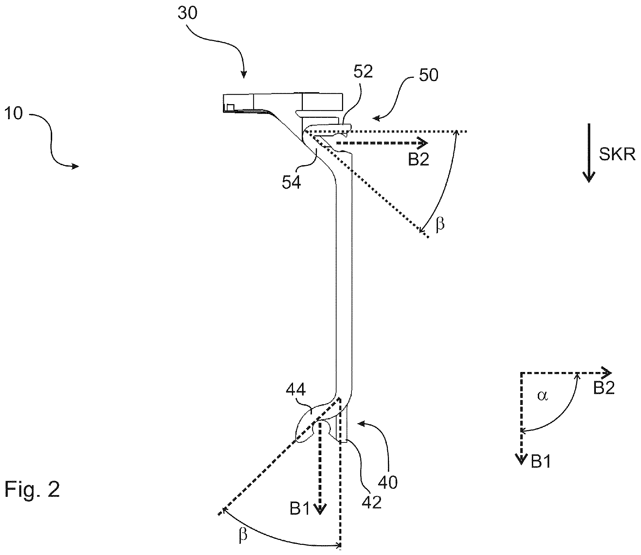

In der Fig. 1 und 2 ist eine erste Verkleidungshalterung 10 dargestellt. Diese ist mit einem Grundkörper 20 ausgestattet, welcher hier im Spritzgussverfahren als Kunststoffbauteil zur Verfügung gestellt ist. Am oberen und am unteren Ende ist jeweils ein Befestigungsabschnitt 40 und 50 vorgesehen, wobei am oberen Ende nach links ragend zusätzlich der Halteabschnitt 30 zu erkennen ist. Darüber hinaus ist der Halteabschnitt 30 zur mechanischen Stabilisierung hier mit einer Mehrzahl von Verstärkungsrippen 32 versehen, welche eine entsprechende mechanische Stabilisierung zur Verfügung stellen.

Die beiden Befestigungsabschnitte 40 und 50 sind hier mit einer Schnapp-Rast-Funktionalität ausgestattet. Das bedeutet, dass der erste Befestigungsabschnitt 40 einen ersten Befestigungsschenkel 42 und einen zweiten Befestigungsschenkel 44, hier zwei Befestigungsschenkel 44, aufweist. In gleicher Weise ist der zweite Befestigungsabschnitt 50 mit einem ersten Befestigungsschenkel 52 bzw. zwei solcher zweiter Befestigungsschenkel 52 und einem zweiten Befestigungsschenkel 54 ausgestattet.

Darüber hinaus ist zu erkennen, dass der Grundkörper 20 eine im Wesentlichen flächige Längserstreckung aufweist, die auf der Rückseite mit einer Anlagefläche 22 zur Verfügung gestellt wird. Die Schwerkraftrichtung SKR ist dabei bezogen auf die entsprechende Montagesituation im Einbau einer solchen Verkleidungshalterung 10.

Fig. 2 zeigt nun die Korrelation der sich einstellenden Winkel bei einer derartigen Verkleidungshalterung 10. So ist der erste Befestigungsabschnitt 40 hier mit zwei Befestigungsschenkeln 44 und 42 versehen, welche miteinander einen entsprechenden Befestigungswinkel β einschließen. Ein solcher Befestigungswinkel β wird auch durch die beiden Befestigungsschenkel 52 und 54 des zweiten Befestigungsabschnitts 50 definiert. Diese beiden Befestigungswinkel β können unterschiedlich ausgebildet sein und sind vorzugsweise jeweils im Bereich zwischen 75° und 290° zur Verfügung gestellt.

Ebenfalls in Fig. 2 dargestellt sind die beiden Befestigungsrichtungen B1 und B2 der beiden Befestigungsabschnitte 40 und 50, welche hier zueinander senkrecht stehen, so dass der Korrelationswinkel α zwischen den beiden Befestigungsrichtungen B1 und B2 hier 90° beträgt. Dies führt zu der später erläuterten Möglichkeit der gesamten Montagebewegung.

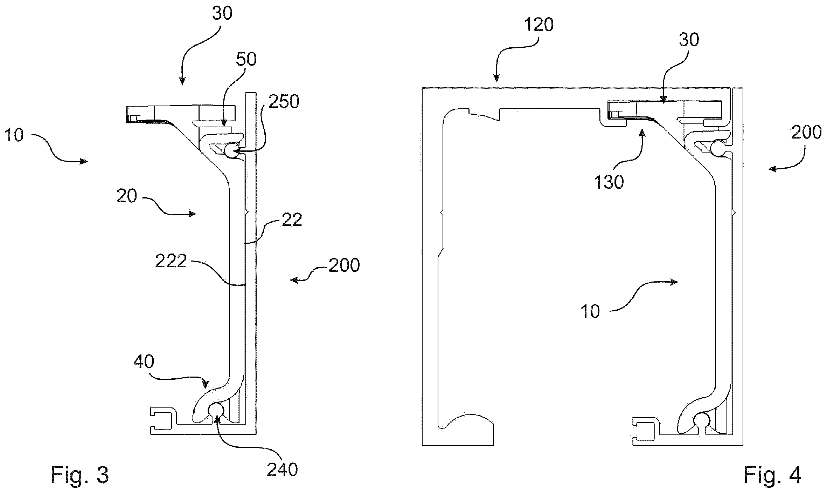

In den Fig. 3 und 4 ist die Korrelation einer solchen Verkleidungshalterung 10 zu weiteren Bauteilen dargestellt. So zeigt die Fig. 3, wie eine entsprechende Anlagefläche 22 zur Anlage an einer entsprechenden Gegenanlagefläche 222 der Verkleidung 200 gelangt. Dies führt zu der bereits erläuterten mechanischen Stabilisierung in der befestigten Position. Durch entsprechende im Querschnitt kreisförmige Rippengestaltungen sind hier die Gegenbefestigungsabschnitte 240 und 250 zur Verfügung gestellt, an welchen die beiden Befestigungsabschnitte 40 und 50 bereits eingerastet sind.

Fig. 4 zeigt auch die Erfüllung der Haltefunktion, bei welcher der Halteabschnitt 30 in einer zugehörigen Haltenut 130 der Rollenlaufbahn 120 angeordnet ist.

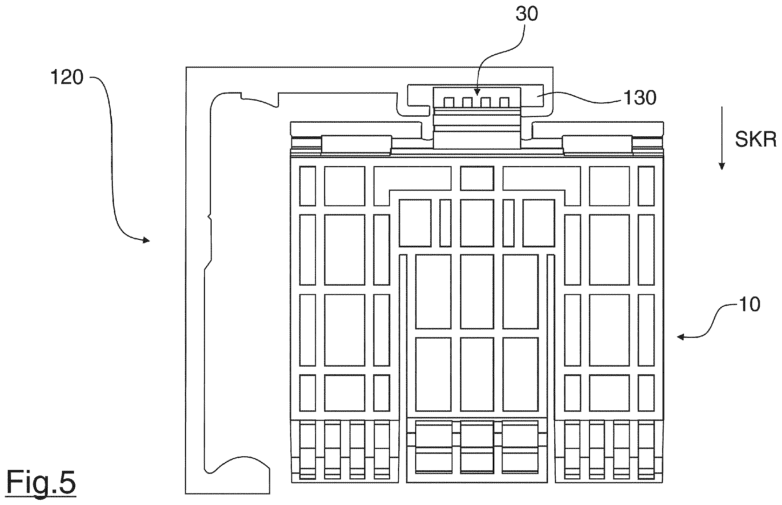

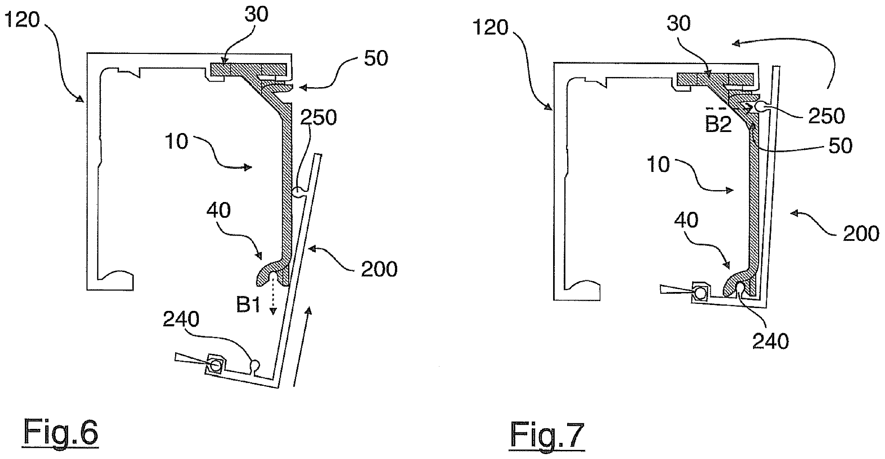

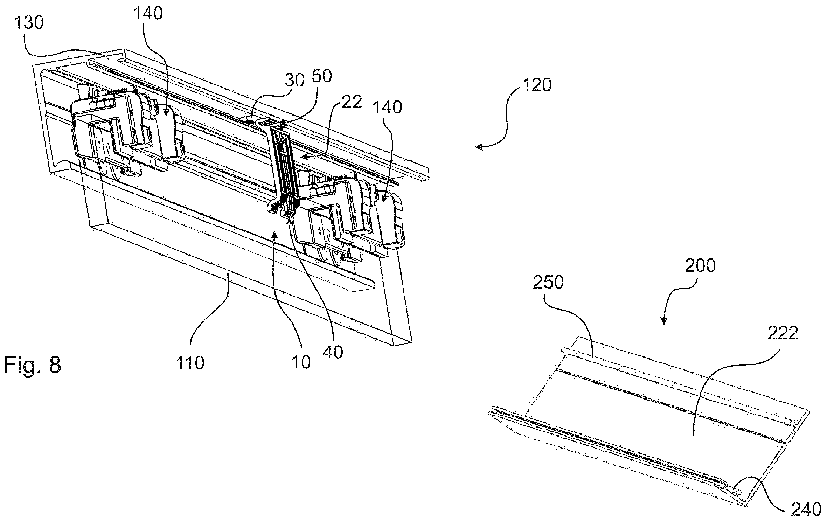

Anhand der Fig. 5 bis 8 wird nun die Befestigung bzw. die Montage näher erläutert. In einem ersten Schritt wird gemäß Fig. 5 der Halteabschnitt 130 der Verkleidungshalterung 10 mit der kurzen Breitseite in die zugehörige Haltenut 130 eingeführt. Durch eine Rotation um eine in der Fig. 5 in Schwerkraftrichtung SKR ausgerichteten Rotationsachse erfolgt eine Festlegung des Halteabschnitts 30 in dem jeweiligen Hinterschnitt der Haltenut 130. Im Ergebnis entsteht eine Situation, wie sie die Fig. 8 links oben bzw. die Fig. 6 zeigt. In dieser Position bleibt die Verkleidungshalterung 10 noch axial verschiebbar. Anschließend erfolgt das Befestigen der Verkleidung 200. Die Verkleidung 200 ist in der Fig. 8 rechts unten dargestellt, und ist nun bereit, entsprechend befestigt zu werden. Für diese Befestigung sind die Gegenanlagefläche 222 sowie die Gegenbefestigungsabschnitte 240 und 250 vorgesehen. Dabei ist der erste Teil der Montagebewegung in der Fig. 6 dargestellt, welcher im Wesentlichen verschiebend bzw. translatorisch erfolgt. Am Ende dieser Bewegung erfolgt ein Einrasten, wobei dieses Einrasten die Befestigungsbewegung entlang der ersten Befestigungsrichtung B1 darstellt. Das Ergebnis dieser Bewegung, welche als erster Teil der Montagebewegung durch das Abgleiten an der Gegenanlagefläche 220 geführt wird, ist in Fig. 7 dargestellt. In Fig. 7 ist weiter der anschließende Endteil der Befestigungsbewegung gezeigt, wobei anhand des Rotationspfeils nun eine Rotation der Verkleidung 200 um den ersten Befestigungsabschnitt 40 erzeugt wird. Dabei rastet nun der zweite Befestigungsabschnitt 50 in dem Gegenbefestigungsabschnitt 250 entlang der zweiten Befestigungsrichtung B2 ein. Das Ende dieser Bewegung zeigt die Fig. 4 als final befestigte Position.

Die voranstehende Beschreibung der Montagebewegung kann auch in umgekehrter Reihenfolge durchgeführt werden, um in erfindungsgemäßer Weise auch eine Demontage der Verkleidung gewährleisten zu können.

Die voranstehende Erläuterung der Ausführungsformen beschreibt die vorliegende Erfindung ausschließlich im Rahmen von Beispielen. Dabei können einzelne Merkmale der Ausführungsformen, sofern technisch sinnvoll und in den Ansprüchen definiert, frei miteinander kombiniert werden, ohne den Rahmen der vorliegenden Erfindung zu verlassen.

### - Bezugszeichenliste

- 10: Verkleidungshalterung
- 20: Grundkörper
- 22: Anlagefläche
- 30: Halteabschnitt
- 32: Verstärkungsrippe
- 40: erster Befestigungsabschnitt
- 42: erster Befestigungsschenkel
- 44: zweiter Befestigungsschenkel
- 50: zweiter Befestigungsabschnitt
- 52: erster Befestigungsschenkel
- 54: zweiter Befestigungsschenkel

- 100: Schiebetürenanlage
- 110: Schiebetür
- 120: Rollenlaufbahn
- 130: Haltenut
- 140: Rollenwagen

- 200: Verkleidung
- 222: Gegenanlagefläche
- 240: erster Gegenbefestigungsabschnitt
- 250: zweiter Gegenbefestigungsabschnitt

- SKR: Schwerkraftrichtung
- B1: erste Befestigungsrichtung
- B2: zweite Befestigungsrichtung
- α: Korrelationswinkel
- β: Befestigungswinkel

## Patentansprüche

1. Verkleidungshalterung (10) zur lösbaren Befestigung, insbesondere an einer Rollenlaufbahn (120) einer Schiebetürenanlage (100), aufweisend einen Grundkörper (20), wobei am Grundkörper (20) ein Halteabschnitt (30) zum Halten der Rollenlaufbahn (120) ausgebildet ist, wobei weiter am Grundkörper (20) ein erster Befestigungsabschnitt (40) zur Befestigung an einem ersten Gegenbefestigungsabschnitt (240) einer Verkleidung (200) in einer ersten Befestigungsrichtung (B1) und ein vom ersten Befestigungsabschnitt (40) beabstandeter zweiter Befestigungsabschnitt (50) zur Befestigung an einem zweiten Gegenbefestigungsabschnitt (250) der Verkleidung (200) in einer zweiten Befestigungsrichtung (B2) ausgebildet ist, wobei die erste Befestigungsrichtung (B1) und die zweite Befestigungsrichtung (B2) miteinander einen Korrelationswinkel (α) aufweisen im Bereich zwischen 70° und 110°,
**dadurch gekennzeichnet,**
**dass** der Halteabschnitt (30) für eine schwenkende und/oder rotierende Befestigung an einer Rollenlaufbahn (120) eine plattenförmige Erstreckung aufweist mit einer Breite, welche kleiner ist als die Länge dieser plattenförmigen Erstreckung, sodass der Halteabschnitt (30) mit der geringeren Breitenerstreckung in eine an der Rollenlaufbahn ausgebildeten, zugehörigen Haltenut (130) einführbar ist und die Befestigung der Verkleidungshalterung (10) an der Rollenlaufbahn (120) durch eine rotatorische Befestigungsbewegung erfolgen kann, wodurch der Halteabschnitt (30) innerhalb der Nut (130) gehalten wird, wobei die Nut (130) auf beiden Seiten mit einem Hinterschnitt ausgebildet ist, hinter welchem die entsprechenden Stirnseiten des plattenförmigen Halteabschnitts (30) eingreifen können, wobei der Halteabschnitt (30) innerhalb der Nut (130) einen Bewegungsspielraum aufweist, so dass der Halteabschnitt verschiebbar in der Haltenut (130) gelagert ist.

2. Verkleidungshalterung (10) nach Anspruch 1,
**dadurch gekennzeichnet,**
**dass** der Korrelationswinkel (α) im Bereich zwischen 85°und 95°, insbesondere bei 90° liegt.

3. Verkleidungshalterung (10) nach einem der vorangegangenen Ansprüche,
**dadurch gekennzeichnet,**
**dass** der Grundkörper (20) eine Anlagefläche (22) aufweist zur Anlage an eine Gegenanlagefläche (222) der Verkleidung (200), wobei die Anlagefläche (22) insbesondere zwischen den beiden Befestigungsabschnitten (40, 50) angeordnet ist.

4. Verkleidungshalterung (10) nach Anspruch 3,
**dadurch gekennzeichnet,**
**dass** die Wandstärke des Grundkörpers (20) wenigstens eines der folgenden Verhältnisse aufweist:
- Abschnitt der Anlagefläche (22) : einem ersten Befestigungsschenkel (42) des ersten Befestigungsabschnitts (40) im Bereich zwischen 0,5 und 1,5
- Abschnitt der Anlagefläche (22) : einem zweiten Befestigungsschenkel (44) des ersten Befestigungsabschnitts (40) im Bereich zwischen 0,5 und 1,5
- Abschnitt der Anlagefläche (22) : einem ersten Befestigungsschenkel (52) des zweiten Befestigungsabschnitts (50) im Bereich zwischen 0,5 und 1,5
- Abschnitt der Anlagefläche (22) : einem zweiten Befestigungsschenkel (54) des zweiten Befestigungsabschnitts (50) im Bereich zwischen 0,5 und 1,5
- Abschnitt der Anlagefläche (22) : dem Halteabschnitt (30) im Bereich zwischen 0,5 und 3

5. Verkleidungshalterung (10) nach einem der vorangegangenen Ansprüche,
**dadurch gekennzeichnet,**
**dass** der erste Befestigungsabschnitt (40) und/oder der zweite Befestigungsabschnitt (50) jeweils einen ersten Befestigungsschenkel (42, 52) und einen zweiten Befestigungsschenkel (44, 54) aufweisen, wobei die beiden Befestigungsschenkel (42, 44, 52, 54) miteinander insbesondere einen Befestigungswinkel (β) im Bereich zwischen 75° und 290° einschließen.

6. Verkleidungshalterung (10) nach einem der vorangegangenen Ansprüche,
**dadurch gekennzeichnet,**
**dass** der erste Befestigungsabschnitt (40) und/oder der zweite Befestigungsabschnitt (50) ausgebildet sind für eine formschlüssige und/oder kraftschlüssige Befestigung an dem jeweiligen Gegenbefestigungsabschnitt (240, 250), insbesondere in Form einer Schnapp-Rast-Verbindung.

7. Verkleidungshalterung (10) nach einem der vorangegangenen Ansprüche,
**dadurch gekennzeichnet,**
**dass** der Grundkörper (20) monolithisch ausgebildet ist und den Halteabschnitt (30), den ersten Befestigungsabschnitt (40) und/oder den zweiten Befestigungsabschnitt (50) in integraler Weise ausbildet.

8. Verkleidungshalterung (10) nach einem der vorangegangenen Ansprüche,
**dadurch gekennzeichnet,**
**dass** der Grundkörper (20), insbesondere im Bereich des Halteabschnitts (30), zumindest zwei Verstärkungsrippen (32) zur mechanischen Verstärkung aufweist, welche vorzugsweise parallel zueinander verlaufen.

9. Verkleidungshalterung (10) nach einem der vorangegangenen Ansprüche,
**dadurch gekennzeichnet,**
**dass** die beiden Befestigungsabschnitte (40, 50) ausgebildet sind für zwei zumindest teilweise unterschiedliche Befestigungsbewegungen.

10. Verkleidung (200) für die Abdeckung einer Rollenlaufbahn (120) einer Schiebetürenanlage (100), aufweisend eine Verkleidungshalterung (10) mit den Merkmalen eines der Ansprüche 1 bis 9, einen ersten Gegenbefestigungsabschnitt (240) zur Befestigung des ersten Befestigungsabschnitts (40) der Verkleidungshalterung (10) entlang einer ersten Befestigungsrichtung (B1), weiter aufweisend einen zweiten Gegenbefestigungsabschnitt (250) für die Befestigung des zweiten Befestigungsabschnitts (50) der Verkleidungshalterung (10) entlang einer zweiten Befestigungsrichtung (B2), wobei die erste Befestigungsrichtung (B1) und die zweite Befestigungsrichtung (B2) miteinander einen Korrelationswinkel (α) aufweisen im Bereich zwischen 70° und 110°.

11. Schiebetürenanlage (100), aufweisend eine Rollenlaufbahn (120) und wenigstens einen in der Rollenlaufbahn (120) verschiebbar gelagerten Rollenwagen (140),
**dadurch gekennzeichnet,**
**dass** die Rollenlaufbahn (120) von einer Verkleidung (200) mit den Merkmalen des Anspruchs 10 wenigstens abschnittsweise abgedeckt ist, welche mit zumindest einer Verkleidungshalterung (10) mit den Merkmalen eines der Ansprüche 1 bis 9 befestigt ist.

12. Verfahren für die Montage einer Verkleidung (200) an einer Rollenlaufbahn (120) einer Schiebetürenanlage (100), aufweisend die folgenden Schritte:
- Befestigen einer Verkleidungshalterung (10) mit den Merkmalen eines der Ansprüche 1 bis 9 an der Rollenlaufbahn (120),
- Befestigen eines ersten Befestigungsabschnitts (40) der Verkleidungshalterung (10) entlang einer ersten Befestigungsrichtung (B1) an einem ersten Gegenbefestigungsabschnitt (240) der Verkleidung (200),
- Befestigen eines zweiten Befestigungsabschnitts (50) der Verkleidungshalterung (10) entlang einer zweiten Befestigungsrichtung (B2) an einem zweiten Gegenbefestigungsabschnitt (250) der Verkleidung (200),
**dadurch gekennzeichnet,**
**dass** die Befestigung der Verkleidungshalterung (10) an der Rollenlaufbahn (120) durch eine rotatorische Befestigungsbewegung im Bereich zwischen 15° und 135° erfolgt.

13. Verfahren nach Anspruch 12,
**dadurch gekennzeichnet,**
**dass** die Befestigung der Befestigungsabschnitte (40, 50) wie folgt durchgeführt wird:
- Befestigen des ersten Befestigungsabschnitts (40) der Verkleidungshalterung (10) entlang der ersten Befestigungsrichtung (B1) an dem ersten Gegenbefestigungsabschnitt (240) der Verkleidung (200) durch eine verschiebende Befestigungsbewegung, insbesondere mit einem Schwenkbereich von weniger als 10°, und/oder
- Befestigen des zweiten Befestigungsabschnitts (50) der Verkleidungshalterung (10) entlang der zweiten Befestigungsrichtung (B2) an dem zweiten Gegenbefestigungsabschnitt (250) der Verkleidung (200) durch Rotation um den ersten Befestigungsabschnitt (40).

## Claims

1. A covering mount (10) for the releasable attachment, in particular to a roller running track (120) of a sliding door installation (100), including a basic body (20), wherein a retaining section (30) for retaining the roller running track (120) is formed at the basic body (20), wherein furthermore at the basic body (20) are formed a first attachment section (40) for attaching to a first counter-attachment section (240) of a covering (200) in a first attachment direction (B1) and a second attachment section (50) spaced apart from the first attachment section (40) for attaching to a second counter-attachment section (250) of the covering (200) in a second attachment direction (B2), wherein the first attachment direction (B1) and the second attachment direction (B2) together include a correlation angle (α) in a range between 70° and 110°,
**characterized in**
**that** the retaining section (30) for a pivoting and/or rotating attachment to a roller running track (120) includes a plate-shaped extension with a width, which is smaller than the length of said plate-shaped extension, such that the retaining section (30) with the lesser width extension is insertable in an associated retaining groove (130) formed at the roller running track (120) and the attachment of the covering mount (10) to the roller running track (120) can be realized by a rotary attachment movement, whereby the retaining section (30) is retained within the groove (130), wherein the groove (130) is formed on both sides with an undercut, behind which undercut can engage the corresponding frontal sides of the plate-shaped retaining section (30), wherein the retaining section (30) includes manoeuvre clearance within the groove (130) such that the retaining section is displaceably supported in the retaining groove (130).

2. The covering mount (10) according to claim 1,
**characterized in**
**that** the correlation angle (α) is in the range between 85° and 95°, in particular at 90°.

3. The covering mount (10) according to any of the preceding claims,
**characterized in**
**that** the basic body (20) includes a contact surface (22) for contact at a counter-contact surface (222) of the covering (200), wherein the contact surface (22) is disposed in particular between the two attachment sections (40, 50).

4. The covering mount (10) according to claim 3,
**characterized in**
**that** the wall thickness of the basic body (20) includes at least one of the following ratios:
- the section of the contact surface (22) : a first attachment branch (42) of the first attachment section (40) in the range between 0.5 and 1.5,
- the section of the contact surface (22) : a second attachment branch (44) of the first attachment section (40) in the range between 0.5 and 1.5,
- the section of the contact surface (22) : a first attachment branch (52) of the second attachment section (50) in the range between 0.5 and 1.5,
- the section of the contact surface (22) : a second attachment branch (54) of the second attachment section (50) in the range between 0.5 and 1.5,
- the section of the contact surface (22) : the retaining section (30) in the range between 0.5 and 3.

5. The covering mount (10) according to any of the preceding claims,
**characterized in**
**that** the first attachment section (40) and/or or the second attachment section (50) respectively include a first attachment branch (42, 52) and a second attachment branch (44, 54), wherein the two attachment branches (42, 44, 52, 54) together in particular include an attachment angle (β) in the range between 75° and 290°.

6. The covering mount (10) according to any of the preceding claims,
**characterized in**
**that** the first attachment section (40) and/or the second attachment section (50) are formed for a positive and/or non-positive attachment to the respective counter-attachment section (240, 250), in particular in the shape of a snap/latch connection.

7. The covering mount (10) according to any of the preceding claims,
**characterized in**
**that** the basic body (20) is monolithically formed and forms the retaining section (30), the first attachment section (40) and/or the second attachment section (50) in an integral manner.

8. The covering mount (10) according to any of the preceding claims,
**characterized in**
**that** the basic body (20), in particular in the area of the retaining section (30) includes at least two reinforcing ribs (32) for mechanical reinforcement, which preferably extend parallel to each other.

9. The covering mount (10) according to any of the preceding claims,
**characterized in**
**that** the two attachment sections (40, 50) are formed for two at least partially different attachment movements.

10. A covering (200) for covering a roller running track (120) of a sliding door installation (100), Including a covering mount (10) having the features of any of the claims 1 to 9, a first counter-attachment section (240) for the attachment of the first attachment section (40) of the covering mount (10) along a first attachment direction (B1), furthermore including a second counter-attachment section (250) for the attachment of the second attachment section (50) of the covering mount (10) along a second attachment direction (B2), wherein the first attachment direction (B1) and the second attachment direction (B2) include a correlation angle (α) in the range between 70° and 110°.

11. A sliding door installation (100), including a roller running track (120) and at least one roller carriage (140) displaceably supported within the roller running track (120),
**characterized in**
**that** a covering (200) having the features of the claim 10 covers the roller running track (120) at least in sections, which is attached with at least one covering mount (10) having the features of any of the claims 1 to 9.

12. A method for mounting a covering (200) to a roller running track (120) of a sliding door installation (100), including the following steps:
- attaching a covering mount (10) having the features of any of the claims 1 to 9 to a roller running track (120),
- attaching a first attachment section (40) to the covering mount (10) along a first attachment direction (B1) to a first counter-attachment section (240) of the covering (200),
- attaching a second attachment section (50) of the covering mount (10) along a second attachment direction (B2) to a second counter-attachment section (250) of the covering (200),
**characterized in**
**that** the attachment of the covering mount (10) to the roller running track (120) is realized by a rotatory attachment movement in the range between 15° and 135°.

13. The method according to claim 12,
**characterized in**
**that** the attachment of the attachment sections (40, 50) is performed as follows:
- attaching the first attachment section (40) of the covering mount (10) along the first attachment direction (B1) to the first counter-attachment section (240) of the covering (200) by a displacing attachment movement, in particular in a pivoting range of less than 10°, and/or
- attaching the second attachment section (50) of the covering mount (10) along the second attachment direction (B2) to the second counter-attachment section (250) of the covering (200) by rotation about the first attachment section (40).

## Revendications

1. Support de revêtement (10) pour le raccordement amovible, tout particulièrement sur une voie de roulement à galets (120) d'une installation de portes coulissantes (100), comprenant un corps de base (20), une section de retenue (30) pour retenir la voie de roulement à galets (120) étant aménagée sur le corps de base (20), par ailleurs étant aménages sur le corps de base (20) une première section de raccordement (40) pour le raccordement sur une première contre-section de raccordement (240) d'un revêtement (200) dans une première direction de raccordement (B1) et une deuxième section de raccordement (50) espacée de la première section de raccordement (40) pour le raccordement sur une deuxième contre-section de raccordement (250) du revêtement (200) dans une deuxième direction de raccordement (B2), dans lequel la première direction de raccordement (B1) et la deuxième direction de raccordement (B2) ensembles comprennent un angle de corrélation (α) dans la plage entre 70° et 110°,
**caractérisé en ce**
**que** la section de retenue (30) pour un raccordement pivotant et/ou rotatif à une voie de roulement à galets (120) comprend une extension en forme de plaque avec une largeur, laquelle est plus petite que la longueur de cette extension en forme de plaque, de sorte que la section de retenue (30) avec l'extension en largeur plus petite est insérable dans une rainure de retenue (130) associée qui est aménagée sur la voie de roulement à galets, et le raccordement du support de revêtement (10) sur la voie de roulement à galets (120) peut être réalisé par un mouvement de raccordement rotatif, par lequel la section de retenue (30) est retenue à l'intérieur de la rainure (130), dans lequel la rainure (130) est aménagée des deux côtés avec une contre-dépouille, derrière laquelle peuvent engager les faces frontales correspondantes de la section de retenue (30) en forme de plaque, la section de retenue (30) comprenant une marge de manoeuvre à l'intérieur de la rainure (130) de sorte que la section de retenue est supportée de façon déplaçable dans la rainure de retenue (130).

2. Support de revêtement (10) selon la revendication 1,
**caractérisé en ce**
**que** l'angle de corrélation (α) se situe dans la plage entre 85° et 95°, tout particulièrement à 90°.

3. Support de revêtement (10) selon l'une des revendications précédentes,
**caractérisé en ce**
**que** le corps de base (20) comprend une surface de contact (22) pour le contact sur une contre-surface de contact (222) du revêtement (200), dans lequel la surface de contact (22) est agencée tout particulièrement entre les deux sections de raccordement (40, 50).

4. Support de revêtement (10) selon la revendication 3,
**caractérisé en ce**
**que** l'épaisseur de paroi du corps de base (20) comprend au moins un des rapports suivants :
- section de la surface de contact (22): à une première branche de raccordement (42) de la première section de raccordement (40) dans la plage entre 0,5 et 1,5,
- section de la surface de contact (22): à une deuxième branche de raccordement (44) de la première section de raccordement (40) dans la plage entre 0,5 et 1,5,
- section de la surface de contact (22): à une première branche de raccordement (52) de la deuxième section de raccordement (50) dans la plage entre 0,5 et 1,5,
- section de la surface de contact (22): à une deuxième branche de raccordement (54) de la deuxième section de raccordement (50) dans la plage entre 0,5 et 1,5,
- section de la surface de contact (22) : à la section de retenue (30) dans la plage entre 0,5 et 3.

5. Support de revêtement (10) selon l'une des revendications précédentes,
**caractérisé en ce**
**que** la première section de raccordement (40) et/ou la deuxième section de raccordement (50) respectivement comprennent une première branche de raccordement (42, 52) et une deuxième branche de raccordement (44, 54), dans lequel les deux branches de raccordement (42, 44, 52, 54) ensembles incluent tout particulièrement un angle de raccordement (β) dans la plage entre 75° et 290°.

6. Support de revêtement (10) selon l'une des revendications précédentes,
**caractérisé en ce**
**que** la première section de raccordement (40) et/ou la deuxième section de raccordement (50) sont aménagées pour un raccordement par la forme et/ou par la force sur la contre-section de raccordement respective (240, 250), tout particulièrement sous forme d'une connexion déclic/encastrement.

7. Support de revêtement (10) selon l'une des revendications précédentes,
**caractérisé en ce**
**que** le corps de base (20) est aménagé de façon monolithique et aménage la section de retenue (30), la première section de raccordement (40) et/ou la deuxième section de raccordement (50) de façon intégrale.

8. Support de revêtement (10) selon l'une des revendications précédentes,
**caractérisé en ce**
**que** le corps de base (20), tout particulièrement dans la région de la section de retenue (30), comprend au moins deux nervures de renforcement (32) pour le renforcement mécanique, lesquelles s'étendent de préférence parallèlement l'une à l'autre.

9. Support de revêtement (10) selon l'une des revendications précédentes,
**caractérisé en ce**
**que** les deux sections de raccordement (40, 50) sont aménagées pour deux mouvements de raccordement au moins partiellement différents.

10. Revêtement (200) pour le recouvrement d'une voie de roulement à galets (120) d'une installation de portes coulissantes (100), comprenant un support de revêtement (10) ayant les caractéristiques de l'une des revendications 1 à 9, une première contre-section de raccordement (240) pour le raccordement de la première section de raccordement (40) du support de revêtement (10) le long d'une première direction de raccordement (B1), comprenant par ailleurs une deuxième contre-section de raccordement (250) pour le raccordement de la deuxième section de raccordement (50) de ce support de revêtement (10) le long d'une deuxième direction de raccordement (B2), la première direction de raccordement (B1) et la deuxième direction de raccordement (B2) ensembles incluant un angle de corrélation (α) dans la plage entre 70° et 110°.

11. Installation de portes coulissantes (100) présentant une voie de roulement à galets (120) et au moins un chariot à galets (10) supporté de façon déplaçable dans la voie de roulement à galets (120)
**caractérisée en ce**
**que** la voie de roulement à galets (120) est recouverte au moins par sections par un revêtement (200) ayant les caractéristiques de la revendication 10, lequel est raccordé par au moins un support de revêtement (10) ayant les caractéristiques de l'une des revendications 1 à 9.

12. Méthode pour le montage d'un revêtement (200) sur une voie de roulement à galets (120) d'une installation de portes coulissantes (100), comprenant les étapes suivantes :
- raccorder un support de revêtement (10) ayant les caractéristiques de l'une des revendications 1 à 9 sur la voie de roulement à galets (120),
- raccorder une première section de raccordement (40) du support de revêtement (10) le long d'une première direction de raccordement (B1) sur une première contre-section de raccordement (240) du revêtement (200),
- raccorder une deuxième section de raccordement (50) du support de revêtement (10) le long d'une deuxième direction de raccordement (B2) sur une deuxième contre-section de raccordement (250) du revêtement (200),
**caractérisée en ce**
**que** le raccordement du support de revêtement (10) sur la voie de roulement à galets (120) est réalisé par un mouvement de raccordement rotatif dans la plage entre 15° et 135°.

13. Méthode selon la revendication 12,
**caractérisée en ce**
**que** le raccordement des sections de raccordement (40, 50) se fait comme suit :
- raccorder la première section de raccordement (40) du support de revêtement (10) le long de la première direction de raccordement (B1) sur la première contre-section de raccordement (240) du revêtement (200) par un mouvement de raccordement déplaçant, tout particulièrement dans une plage de pivotement de moins de 10° et/ou
- raccorder la deuxième section de raccordement (50) du support de revêtement (10) le long de la deuxième direction de raccordement (B2) sur la deuxième contre-section de raccordement (250) du revêtement (200) par rotation atour de la première section de raccordement (40).
